# EUROPEAN PATENT APPLICATION

(11) **EP 3 159 450 A1**
(43) Date of publication of application: **26.04.2017**
(21) Application number: 15809404.5
(22) Date of filing: 20.03.2015
(51) Int. Cl.: E02B 3/26, B63B 59/02

(54) **FENDER, FENDER MOUNTING METHOD, AND FENDER MANUFACTURING METHOD**

(30) Priority: 17.06.2014 JP 2014123926; 02.03.2015 JP 2015039920
(71) Applicant: Shibata Industrial Co., Ltd., Akashi-shi, Hyogo 674-0082 (JP)
(72) Inventor: IKEBE Masamitsu, Akashi-shi Hyogo 674-0082 (JP); KODA Hiroaki, Akashi-shi Hyogo 674-0082 (JP); FUKUI Toshiyuki, Akashi-shi Hyogo 674-0082 (JP)
(74) Representative: Cleveland
(86) International application number: PCT/JP2015/058408
(87) International publication number: WO 2015/194220

(57) **Abstract**

A fender (10) mounted on a quay (11) includes a buffer portion (12) for relieving an impact at the time of mooring of a ship and a quay fixing portion (14a, 14b) for mounting the buffer portion (12) on the quay (11). The quay fixing portion (14a, 14b) includes a fixing member (18a, 18b) having higher rust preventiveness than an iron material. Further, the quay fixing portion (14a, 14b) includes a through-hole (16a to 16d) for inserting a bolt for mounting the fender (10) on the quay (11). When structuring the fender in this manner, the fixing member (18a, 18b) has higher rust preventiveness than an iron material, whereby rusting is suppressed also in such a state that the surface of the fixing member (18a, 18b) and the through-hole (16a to 16d) passing through the fixing member (18a, 18b) are exposed to the exterior.

## Description

### Technical Field

The present invention relates to a fender, and more particularly, it relates to a fender mounted on a quay or the like, a method of mounting a fender and a method of manufacturing a fender.

### Background Art

Fenders of various shapes are known in general, and fenders of a V-shaped type (Japanese Unexamined Patent Publication No. 2003-55938), a truncated cone type (Japanese Unexamined Patent Publication No. 2001-172940), a rectangular type (Japanese Unexamined Patent Publication No. 2000-309913), a cylindrical type (Japanese Unexamined Patent Publication No. 7-197431) and the like are proposed, for example. Among the fenders, there is also such a one that a reinforcing plate is embedded in a fixing portion mounting the fender on a quay or the like (for example, Japanese Unexamined Patent Publication No. 2003-35938).

### Prior Art

### Patent Document

Patent Document 1: Japanese Unexamined Patent Publication No. 2003-55938
Patent Document 2: Japanese Unexamined Patent Publication No. 2001-172940
Patent Document 3: Japanese Unexamined Patent Publication No. 2000-309913
Patent Document 4: Japanese Unexamined Patent Publication No. 7-197431

For a reinforcing plate such as that described above, an iron plate is frequently employed in general. Therefore, it has been necessary to cover an end portion and a through-hole portion for bolt fixation with rubber or the like so that the reinforcing plate is not exposed to the exterior, in order to prevent the reinforcing plate from rusting. Also when covering the reinforcing plate with rubber or the like, it is apprehended that the reinforcing plate is exposed to the exterior due to breakage of the rubber resulting from an impact or deterioration over time.

The present invention has been proposed in order to solve the aforementioned problems, and aims at providing a fender or the like whose durability against corrosion is improved in a state where a fixing member provided on a quay fixing portion for mounting the fender on a quay or the like is exposed to the exterior.

### Disclosure of the Invention

In order to attain the aforementioned object, a fender according to a first aspect of the present invention is a fender mounted on a quay or the like, and includes a buffer portion for relieving an impact at the time of mooring of a ship and a quay fixing portion for mounting the buffer portion on the quay or the like, while the quay fixing portion includes a fixing member having higher rust preventiveness than an iron material.

When structuring the fender in this manner, rusting is suppressed also in a state where the fixing member is exposed to the exterior of the fender.

A fender according to a second aspect of the present invention is such a one that the fixing member is made of a material having smaller specific gravity than an iron material in the structure of the invention according to the first aspect.

When structuring the fender in this manner, the material having smaller specific gravity than an iron material is employed for the fixing member, whereby the weight of the whole of the fender can be reduced.

A fender according to a third aspect of the present invention is such a one that the buffer portion is made of a rubber material and the fixing member is made of a combustible material in the structure of the invention according to the first aspect or the second aspect.

When structuring the fender in this manner, the fixing member and the buffer portion can be incinerated in a mass when disposing of the fender.

A fender according to a fourth aspect of the present invention is such a one that the fixing member is provided in the form of a flat plate in order to come into contact with the quay or the like as the quay fixing portion, and connected with the buffer portion on a side opposite to a side coming into contact with the quay or the like in the structure of the invention according to any one of the first aspect to the third aspect.

When structuring the fender in this manner, the fixing member itself directly comes into contact with the quay or the like when mounting the fender on the quay.

A fender according to a fifth aspect of the present invention is such a one that the fixing member is embedded in the quay fixing portion in the structure of the invention according to any one of the first aspect to the third aspect.

When structuring the fender in this manner, the fixing member is embedded in the quay fixing portion, and enters a state covered with a cover member or the like. Also in a case of covering the fixing member with a cover member or the like in this manner, a case where the cover member is broken or the like and the fixing member is exposed is also conceivable, while rusting can be suppressed also in such a case since the fixing member has rust preventiveness.

A fender according to a sixth aspect of the present invention is such a one that the quay fixing portion further includes a through-hole for inserting a bolt for mounting the fender on the quay or the like and the through-hole passes through the fixing member in the structure of the invention according to any one of the first aspect to the fifth aspect.

When structuring the fender in this manner, a portion passing through the fixing member is exposed to the exterior, while rusting is suppressed since the fixing member has higher rust preventiveness than an iron material.

A fender according to a seventh aspect of the present invention is such a one that the buffer portion includes a bumper plate provided on a side coming into contact with the ship and a bumper plate fixing portion for fixing the bumper plate and the bumper plate fixing portion includes a bumper plate fixing member having higher rust preventiveness than an iron material in the structure of the invention according to any one of the first aspect to the sixth aspect.

By structuring the fender in this manner, a rust preventing effect similar to that of the fixing member of the quay fixing portion can be attained also in the fender including the bumper plate.

A method of mounting a fender according to an eighth aspect of the present invention is a method of mounting a fender including a buffer portion for relieving an impact at the time of mooring of a ship and a quay fixing portion, employed for mounting the fender on a quay or the like, including a fixing member having higher rust preventiveness than an iron material, and includes steps of providing a through-hole in the quay fixing portion on a position corresponding to a mounting bolt in the quay or the like serving as an installation location to pass through the fixing member and mounting the quay fixing portion on the quay through the through-hole with the mounting bolt.

When structuring the method of mounting a fender in this manner, the through-hole conformed to an installation location for the quay to be mounted with the fender can be provided regardless of rust.

A method of manufacturing a fender according to a ninth aspect of the present invention is a method of manufacturing a fender including a buffer portion for relieving an impact at the time of mooring of a ship and a quay fixing portion, employed for mounting the buffer portion on a quay or the like, including a fixing member having higher rust preventiveness than an iron material, and includes steps of preparing a fender material extending in a longitudinal direction so that a section in a short-side direction has the same shape by connecting a member corresponding to the buffer portion to a member corresponding to the quay fixing portion, cutting the fender material in a direction intersecting with the longitudinal direction in a prescribed length with respect to the longitudinal direction and providing a through-hole in the quay fixing portion on a position corresponding to a mounting bolt in the quay or the like serving as an installation location to pass through the fixing member.

When structuring the method of manufacturing a fender in this manner, the fender can be manufactured by providing the through-hole on an element obtained by cutting the fender material without specifically regarding a countermeasure against rusting.

As hereinabove described, rusting can be suppressed in the fender according to the first aspect of the present invention also when using the fender in a state of exposing the fixing member to the exterior, whereby durability of the fender against corrosion can be improved.

In the fender according to the second aspect of the present invention, the weight of the whole of the fender can be reduced in addition to the effect of the invention according to the first aspect, whereby the cost related to transportation and disposal (in general, the cost for transportation and disposal is responsive to the weight) can be suppressed.

In the fender according to the third aspect of the present invention, time for separating the fixing member and the buffer portion from each other can be saved when disposing of the fender, in addition to the effect of the invention according to the first aspect or the second aspect.

In the fender according to the fourth aspect of the present invention, fixation to a quay or the like gets stronger when mounting the fender on the quay, in addition to the effect of the invention according to any one of the first aspect to the third aspect.

In the fender according to the fifth aspect of the present invention, rusting can be suppressed even if the fixing member is exposed due to breakage or the like of the cover member in addition to the effect of the invention according to any one of the first aspect to the third aspect, whereby reliability of the fender can be improved.

In the fender according to the sixth aspect of the present invention, proceeding of rust in the fixing member can be suppressed in addition to the effect of the invention according to any one of the first aspect to the fifth aspect, whereby the fixing member may not be covered with rubber or the like.

In the fender according to the seventh aspect of the present invention, durability of the fender including the bumper plate against corrosion can be improved in addition to the effect of the invention according to any one of the first aspect to the sixth aspect.

In the method of mounting a fender according to the eighth aspect of the present invention, the through-hole can be provided regardless of rust, whereby an operation of mounting the fender on a quay can be efficiently performed.

In the method of manufacturing a fender according to the ninth aspect of the present invention, the fender can be manufactured from the fender material without specifically regarding a countermeasure against rusting, whereby improvement of manufacturing efficiency for the fender can be attained.

### Brief Description of the Drawings

[Fig. 1] A perspective view showing the appearance of a fender according to a first embodiment of the present invention.
[Fig. 2] A partial schematic sectional view along a line II-II shown in Fig. 1.
[Fig. 3] A partial schematic sectional view of a fender according to a second embodiment of the present invention.
[Fig. 4] A partial schematic sectional view of a fender according to a third embodiment of the present invention.
[Fig. 5] A partial schematic sectional view of a fender according to a fourth embodiment of the present invention.
[Fig. 6] Diagrams illustrating steps of a method of mounting a fender according to a fifth embodiment of the present invention. The respective steps are shown at (1) to (4).
[Fig. 7] Diagrams illustrating steps of a method of manufacturing a fender according to a sixth embodiment of the present invention. (1) shows a step of cutting out a fender from a fender material, and (2) shows a step of providing through-holes on the fender.
[Fig. 8] Diagrams illustrating a method of disposing of a fender according to a seventh embodiment of the present invention. (1) shows a state of detaching a fender to be disposed of from a quay, and (2) shows a state of finely cutting the fender.
[Fig. 9] A partial schematic sectional view of a fender according to an eighth embodiment of the present invention.
[Fig. 10] A schematic sectional view of a fender according to a ninth embodiment of the present invention.
[Fig. 11] A schematic sectional view of a fender according to a tenth embodiment of the present invention.
[Fig. 12] A partial schematic sectional view of a fender according to an eleventh embodiment of the present invention.
[Fig. 13] An appearance view of a fender according to a twelfth embodiment of the present invention.
[Fig. 14] A schematic sectional view of a fender according to a thirteenth embodiment of the present invention.

### Description of Embodiments

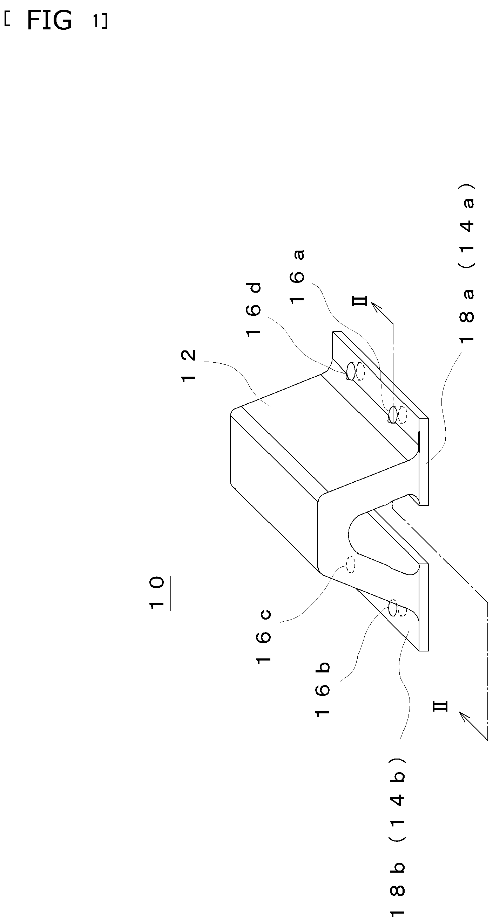

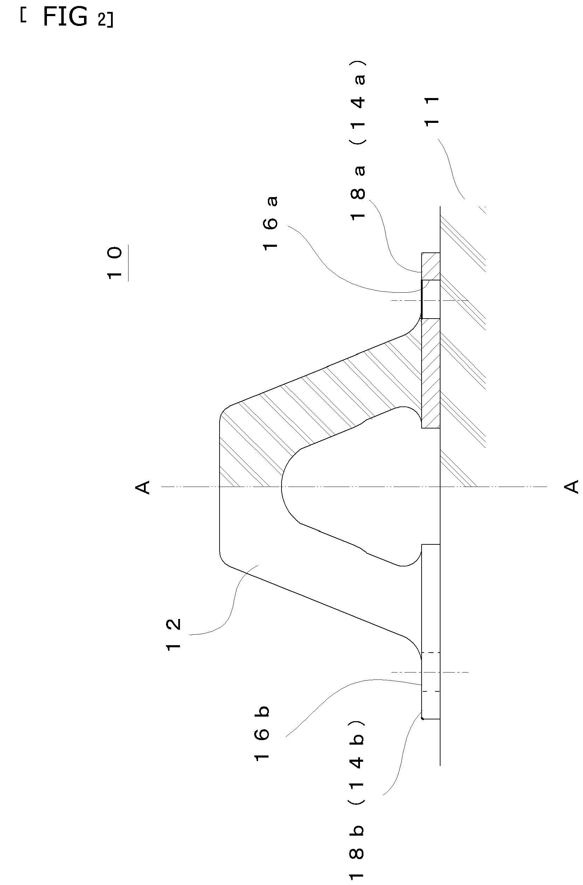

Fig. 1 is a perspective view showing the appearance of a fender according to a first embodiment of the present invention, and Fig. 2 is a partial schematic sectional view along a line II-II shown in Fig. 1. Fig. 2 shows a front elevational view on the left side and a schematic sectional view on the right side along a centerline (two-dot chain line A-A) of a fender 10 serving as a boundary.

Referring to these figures, the fender 10 includes a buffer portion 12 for relieving an impact at the time of mooring of a ship and quay fixing portions 14a and 14b for mounting the buffer portion on a quay 11.

The buffer portion 12 is formed by an elastic body such as rubber (natural rubber, styrene-butadiene rubber (SBR), chloroprene rubber (CR) or the like) or a polymeric material consisting of polyurethane having elasticity or the like, and so configured that a shape as viewed along a section is substantially inverted V-shaped.

The quay fixing portions 14a and 14b are constituted of fixing members 18a and 18b made of a material, such as stainless steel (SUS304 or the like), synthetic resin (polyethylene or the like) or the like, for example, having higher rust preventiveness than an iron material. The fixing members 18a and 18b are provided in the form of flat plates in order to come into contact with the quay 11, and connected with a substantially inverted V-shaped base portion of the buffer portion 12 on a side opposite to the side in contact with the quay 11 respectively. Therefore, the fixing members 18a and 18b are in states exposed to the exterior. The buffer portion 12 and the fixing members 18a and 18b may be pasted to each other with an adhesive, for example, to be bonded to each other. In a case of preparing the buffer portion 12 from a rubber material, the buffer portion 12 and the fixing members 18a and 18b may be integrated with each other by performing vulcanization bonding. Not limited to this, an arbitrary method can be employed for bonding between the buffer portion 12 and the fixing members 18a and 18b.

The quay fixing portions 14a and 14b include four through-holes 16a to 16d for inserting bolts for mounting the fender 10 on the quay 11. The through-holes 16a to 16d are provided on mounting portions on outer sides of connecting portions between the fixing members 18a and 18b and the buffer portion 12, and pass through the fixing members 18a and 18b. Fig. 2 shows centerlines of the respective ones of the through-holes 16a and 16b with one-dot chain lines (this also applies to the following drawings).

When structuring the fender in this manner, rusting is suppressed also in such a state that the surfaces of the fixing members 18a and 18b and the through-holes 16a to 16d passing through the fixing members 18a and 18b are exposed to the exterior, since the fixing members 18a and 18b have higher rust preventiveness than an iron material. Thus, rusting can be suppressed even if using the fender 10 in a state exposing the fixing members 18a and 18b to the exterior, whereby durability of the fender 10 against corrosion can be improved. When durability of the fixing members 18a and 18b is improved, deterioration may proceed faster in the buffer portion 12 of the fender (in a case where the buffer portion 12 is constituted of a rubber material or the like, for example). In a case where the buffer portion 12 of the fender deteriorates faster, it is also possible to reuse the fixing members 18a and 18b by removing an old rubber material portion and mounting a new buffer portion 12 on the fixing members 18a and 18b.

When mounting the fender 10 on the quay 11, the fixing members 18a and 18b themselves directly come into contact with the quay 11. When mounting the fender 10 on the quay, therefore, fixation to the quay 11 gets stronger.

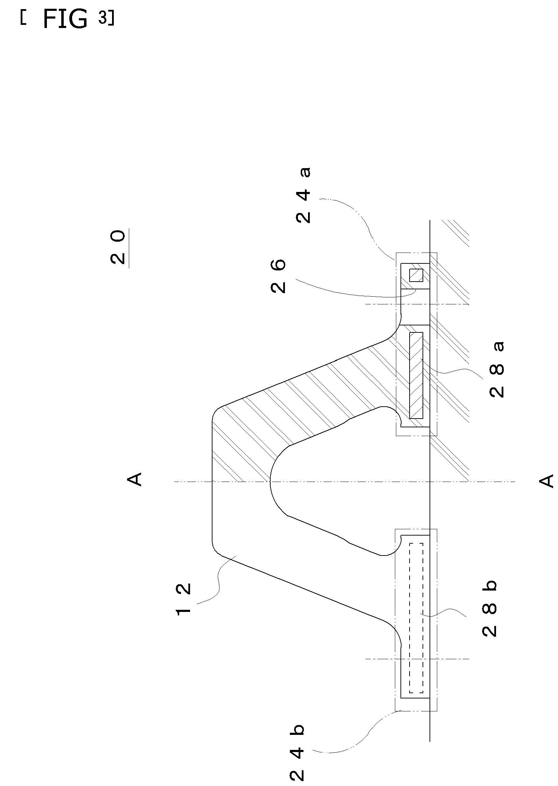

Fig. 3 is a partial schematic sectional view of a fender according to a second embodiment of the present invention. In description, the fender is basically identical to that according to the first embodiment, and hence the fender is described with reference to different points thereof.

Referring to the figure, fixing members 28a and 28b are embedded in quay fixing portions 24a and 24b in a fender 20 according to this embodiment. More specifically, the quay fixing portions 24a and 24b are connected with a substantially inverted V-shaped base portion of a buffer portion 12 respectively, and cover members covering the fixing members 28a and 28b are constituted of rubber, polyurethane having elasticity or the like similarly to the buffer portion 12.

Through-holes 26 are provided on mounting portions on outer sides of connecting portions between the quay fixing portions 24a and 24b and the buffer portion 12 (the figure omits illustration of the through-hole on the side of the quay fixing portion 24b). Inner walls of the through-holes 26 are covered with the aforementioned cover members, and not exposed to the exterior.

When structuring the fender in this manner, rusting can be suppressed even if the fixing members 28a and 28b are exposed due to breakage of the cover members or the like, whereby reliability of the fender 20 can be improved.

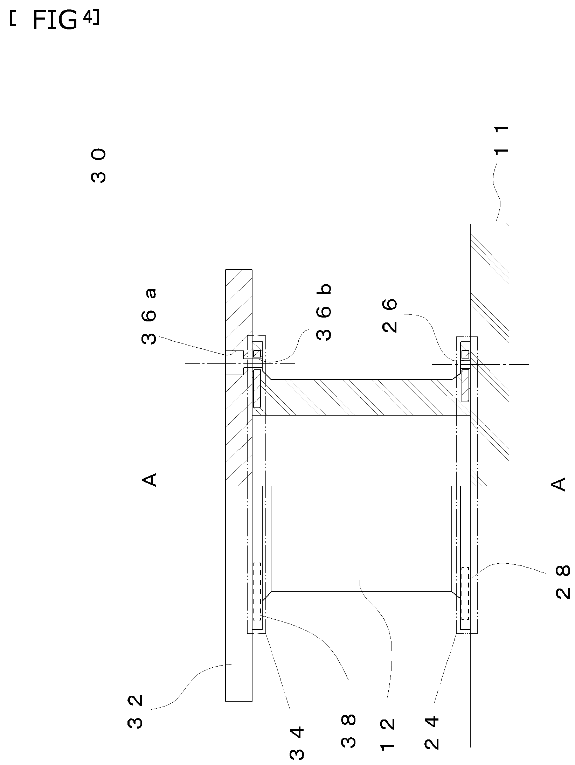

Fig. 4 is a partial schematic sectional view of a fender according to a third embodiment of the present invention. In description, the fender is basically identical to that according to the second embodiment, and hence the fender is described with reference to different points thereof.

Referring to the figure, first, the shape of a body portion of a buffer portion 12 is cylindrical in a fender 30 according to this embodiment. A quay fixing portion 24 and a fixing member 28 are similar to the quay fixing portions 24a and 24b and the fixing members 28a and 28b described with reference to the second embodiment respectively, while the same are configured as collar-shaped flanges in conformity to the shape of the buffer portion 12.

The buffer portion 12 has a structure including a bumper plate 32 provided on a side opposite to a side mounted on a quay 11, i.e., on a side coming into contact with a ship, and a bumper plate fixing portion 34 for fixing the bumper plate 32.

The bumper plate fixing portion 34 is configured as a collar-shaped flange protruding from the body portion, and a bumper plate fixing member 38 having higher rust preventiveness than an iron material is embedded therein. The bumper plate fixing member 38 can be constituted of stainless steel or resin or the like, similarly to the fixing member 28. A method of embedding the bumper plate fixing member 38 in this bumper plate fixing portion 34 is similar to the method of embedding the fixing members 28a and 28b in the quay fixing portions 24a and 24b described with reference to the second embodiment, and hence description thereof is not repeated here.

Through-holes 36a and 36b for inserting mounting bolts for mounting the bumper plate 32 on the bumper plate fixing portion 34 are provided on the bumper plate 32 and the bumper plate fixing portion 34 respectively.

By structuring the fender in this manner, a rust preventing effect similar to that of the fixing member 28 of the quay fixing portion 24 can be attained also in the cylindrical fender 30 including the bumper plate 32. Thus, durability of the fender 30 including the bumper plate 32 against corrosion can be improved.

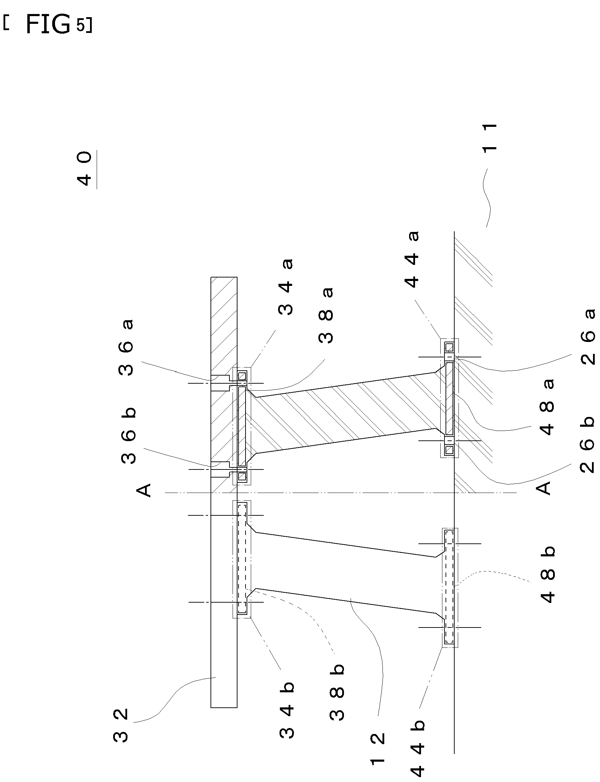

Fig. 5 is a partial schematic sectional view of a fender according to a fourth embodiment of the present invention. In description, the fender is basically identical to that according to the third embodiment, and hence the fender is described with reference to different points thereof.

Referring to the figure, first, a pair of body portions of a buffer portion 12 are in a shape (also referred to as a rectangular shape) extending from a rear surface of a bumper plate 32 toward a quay 11 to broaden in an inverted V-shaped manner in a fender 40 according to this embodiment. While quay fixing portions 44a and 44b and fixing members 48a and 48b correspond to the quay fixing portion 24 and the fixing member 28 described with reference to the third embodiment respectively, shapes thereof are changed in conformity to the buffer portion 12. In other words, the quay fixing portions 44a and 44b and the fixing members 48a and 48b are configured to extend from the body portions to both sides in a sectional direction in conformity to the shape of the buffer portion 12. A through-hole 26b provided on the quay fixing portion 44a is similar to the through-hole 26a or the like. While through-holes similar to those of the quay fixing portion 44a are provided also as to the quay fixing portion 44b, the figure shows only centerlines of the through-holes, for the convenience of illustration.

While bumper plate fixing portions 34a and 34b and bumper plate fixing members 38a and 38b correspond to the bumper plate fixing portion 34 and the bumper plate fixing member 38 described with reference to the third embodiment, shapes thereof are changed in conformity to the buffer portion 12. In other words, the bumper plate fixing portions 34a and 34b and the bumper plate fixing members 38a and 38b are configured to extend from the body portions to both sides in the sectional direction in conformity to the shape of the buffer portion 12.

By structuring the fender in the aforementioned manner, a similar rust preventing effect can be attained also in the rectangular fender 40 including a bumper plate 32, and durability against corrosion can be improved by this.

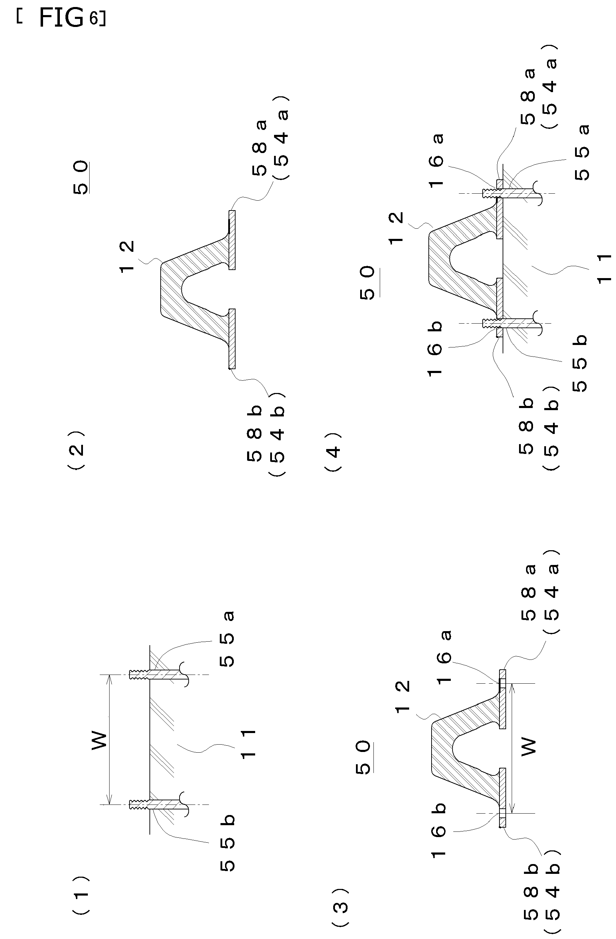

Fig. 6 shows diagrams illustrating steps of a method of mounting a fender according to a fifth embodiment of the present invention.

First, referring to (1), mounting bolts 55a and 55b for mounting a fender are provided on a quay 11. More specifically, the mounting bolts 55a and 55b are provided on the quay 11 while separating from each other by an interval W.

Referring to (2), a fender 50 to be mounted on the quay 11 is prepared. While the inverted V-shaped/exposed type one illustratively described with reference to the first embodiment is employed as the fender 50, it is also possible to employ any of the fenders described with reference to the remaining embodiments. In this stage, however, through-holes are not yet provided on fixing members 58a and 58b (quay fixing portions 54a and 54b).

Referring to (3), through-holes 16a and 16b are provided in the quay fixing portions 54a and 54b on positions corresponding to the mounting bolts 55a and 55b in the quay 11 serving as an installation location. In other words, the through-holes 16a and 16b are provided on the fixing members 58a and 58b connected to both sides of the buffer portion 12 at the interval W in conformity to the mounting bolts 55a and 55b of the quay 11 respectively.

Referring to (4), the fender 50 provided with the through-holes 16a and 16b at (3) is mounted on the quay 11. More specifically, mounting is completed by registering the through-holes 16a and 16b of the respective ones of the fixing members 58a and 58b with the mounting bolts 55a and 55b of the quay 11, inserting the mounting bolts 55a and 55b from the through-holes 16a and 16b, and fastening the fender 50 and the quay 11 to each other properly with washers and nuts (not shown).

When structuring the method of mounting a fender in this manner, the through-holes 16a and 16b conformed to the installation location for the quay 11 to be mounted with the fender 50 can be provided on the fixing members 58a and 58b (the quay fixing portions 54a and 54b) regardless of rust. Therefore, the through-holes 16a and 16b can be provided regardless of rust, whereby an operation of mounting the fender 50 on the quay 11 can be efficiently performed. The sizes of the through-holes 16a and 16b may be corrected on the installation location. In a case where positions of the through-holes 16a and 16b opened before transportation of the fender to the location (at the time of shipment from a factory or the like) deviate, for example, the through-holes 16a and 16b may be scraped on the installation location, in order to slightly enlarge the through-holes 16a and 16b in conformity to the mounting position.

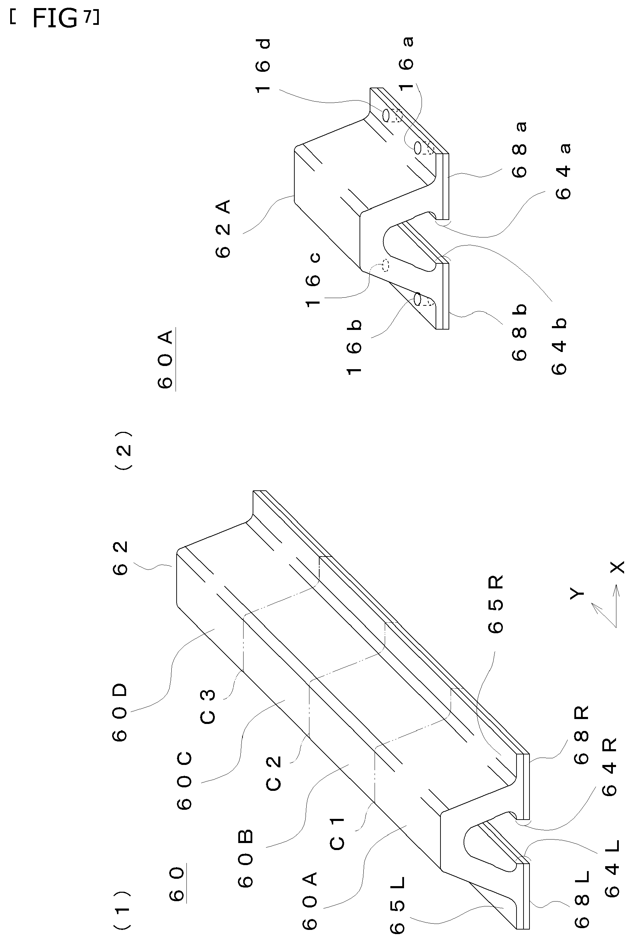

Fig. 7 shows diagrams illustrating steps of a method of manufacturing a fender according to a sixth embodiment of the present invention. More specifically, a method of manufacturing a fender 60A including a buffer portion 62A and quay fixing portions 64a and 64b by cutting a fender material 60 is now described.

First, referring to (1), the fender material 60 extending in a longitudinal direction Y so that a section in a short-side direction X has the same shape is prepared by connecting a member 62 corresponding to a buffer portion to members 64R and 64L corresponding to quay fixing portions.

The member 62 corresponding to the buffer portion has an inverted V shape as viewed along a section in the short-side direction X, and an inverted V-shaped base portion is connected with the members 64R and 64L corresponding to the quay fixing portions.

The members 64R and 64L corresponding to the quay fixing portions include extended portions 65R and 65L extended outward from the inverted V-shaped base portion of the member 62 corresponding to the buffer portion and members 68R and 68L corresponding to fixing members provided on a side closer to the quay than the extended portions 65R and 65L.

The members 68R and 68L corresponding to the fixing members are constituted of members 68R and 68L corresponding to fixing members having higher rust preventiveness than an iron material, and provided in the form of flat plates.

The extended portions 65R and 65L are integrally configured to cover surfaces of the members 68R and 68L corresponding to the fixing members on a side opposite to the side closer to the quay.

The fender material 60 is cut along cutting plane lines C1 to C3 in a direction orthogonal to a longitudinal direction Y in a prescribed length with respect to the longitudinal direction, as further shown at (1). Thus, fenders 60A to 60D are obtained. When making illustration as to the fender 60A, the fender 60A includes a buffer portion 62A for relieving an impact at the time of mooring of a ship and quay fixing portions 64a and 64b including extended portions 65a and 65b and fixing members 68a and 68b (see (2) of the figure). When associating the respective portions of the fender 60A and the respective portions of the fender material 60 with each other, the buffer portion 62A corresponds to the member 62 corresponding to the buffer portion, the extended portions 65a and 65b correspond to the extended portions 65R and 65L, the fixing members 68a and 68b correspond to the members 68R and 68L corresponding to the fixing members, and the quay fixing portions 64a and 64b correspond to the members 64R and 64L corresponding to the quay fixing portions. Also as to the fenders 60B to 60D, the respective portions are similar to those of the fender 60A.

As shown at (2), through-holes 16a to 16d are provided in the quay fixing portions 64a and 64b of the fender 60A on positions corresponding to mounting bolts in a quay or the like serving as an installation location. The through-holes 16a and 16b are so provided as to pass through the extended portions 65a and 65b and the fixing members 68a and 68b.

When structuring the method of manufacturing a fender in this manner, the desired fender 60A can be manufactured by providing the through-holes 16a to 16d on an element obtained by cutting the fender material 60 without specifically regarding a countermeasure against rusting. Therefore, improvement of manufacturing efficiency for the fender 60A can be attained.

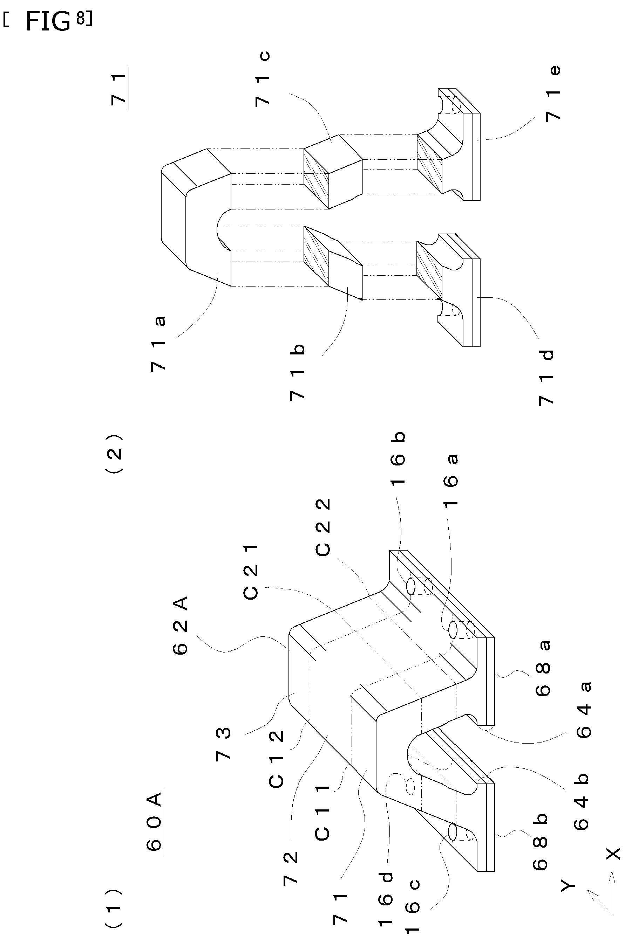

Fig. 8 shows diagrams of steps of a method of disposing of a fender according to a seventh embodiment of the present invention. While a fender 60A shown in Fig. 8 is similar to that described with reference to the sixth embodiment, it is assumed that a buffer portion 62A is constituted of a rubber material and fixing members 68a and 68b are constituted of a combustible synthetic resin material such as polyethylene, for example.

First, referring to (1), cut pieces 71 to 73 are obtained by cutting the fender 60A along cutting plane lines C11 and C12 in a width direction X.

When illustratively making description as to the cut piece 71 with reference to (2), small cut pieces 71a to 71e are obtained by cutting the cut piece 71 along cutting plane lines C21 and C22 in a longitudinal direction Y shown at (1). The cut pieces 72 and 73 may also be similarly cut along the cutting plane lines C21 and C22 in the longitudinal direction Y.

When structuring the method of disposing of a fender in this manner, the buffer portion 62A is constituted of a rubber material and the fixing members 68a and 68b are constituted of a combustible synthetic resin material, whereby the small cut pieces 71a to 71e can be incinerated in a mass. In other words, the fixing members 68a and 68b and the buffer portion 62A can be incinerated without distinction when disposing of the fender 60A. When disposing of the fender 60A, therefore, time for separating the fixing members 68a and 68b and the buffer portion 62A from each other can be saved.

The method of disposing of a fender is not restricted to the aforementioned steps, but cutting into the cutting plane lines C11 and C12 in the width direction X may be performed after cutting the fender 60A along the cutting plane lines C21 and C22 in the longitudinal direction Y.

The cutting plane lines C21 and C22 in the longitudinal direction Y and the cutting plane lines C11 and C12 in the width direction X can be provided in arbitrary numbers and at arbitrary intervals, so that cut pieces of desired sizes are obtained. Further, cutting areas are decreased and a burden at the time of cutting can be reduced by so providing the cutting plane lines in the width direction X as to pass through through-holes 16a to 16d.

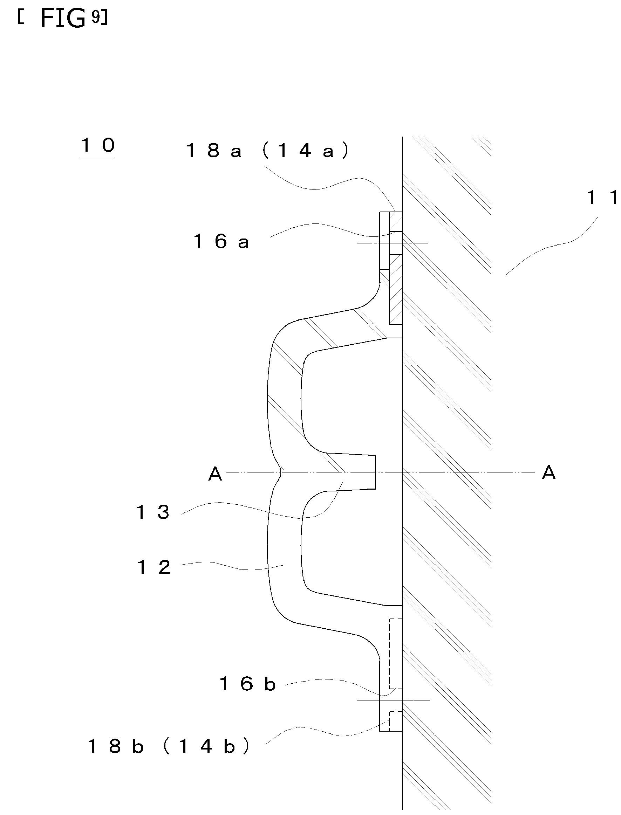

Fig. 9 is a partial schematic sectional view of a fender according to an eighth embodiment of the present invention. In description, the fender is basically identical to that according to the first embodiment, and hence the fender is described with reference to different points thereof.

Referring to the figure, a buffer portion 12 is configured to be substantially M-shaped in sectional view in a fender 10 according to this embodiment. In other words, the buffer portion 12 has a rib 13 on a central portion thereof. Fixing members 18a and 18b are connected with a substantially M-shaped base portion of the buffer portion 12 on a side opposite to a side coming into contact with a quay.

Thus, the present invention can also be applied to the fender 10 including the buffer portion 12 having the rib 13 on the central portion, and durability of the fender 10 against corrosion can be improved.

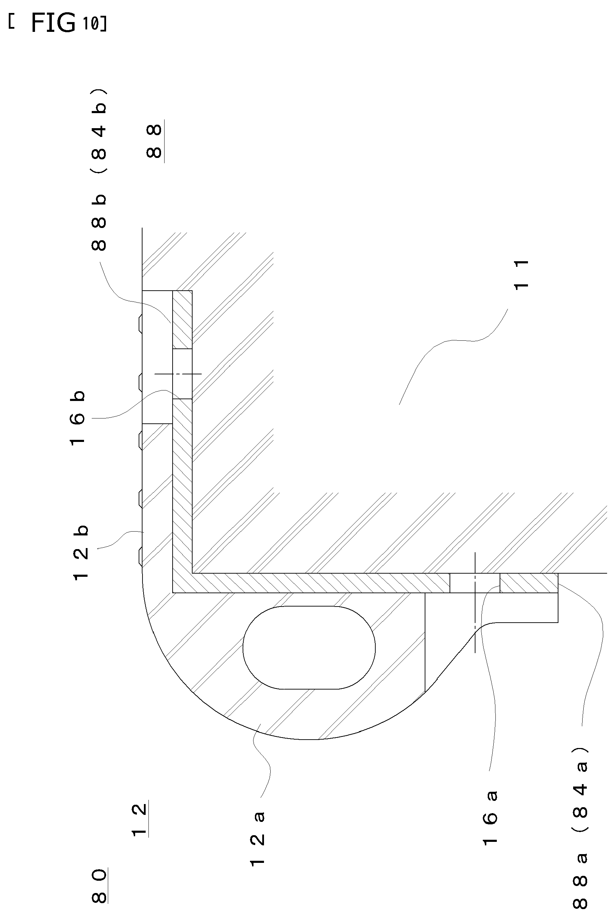

Fig. 10 is a schematic sectional view of a fender according to a ninth embodiment of the present invention. In description, the fender is basically identical to that according to the first embodiment, and hence the fender is described with reference to different points thereof.

Referring to the figure, a fender 80 according to this embodiment is of a type mounted on a corner of a top end of a quay 11.

A buffer portion 12 includes a front surface portion 12a mounted on a sidewall of the quay 11 and an upper end portion 12b mounted on the top end of the quay 11. The front surface portion 12a is configured to be in a substantially inverted P shape in sectional view. In other words, the front surface portion 12a has a curved surface convexed with respect to a side opposite to the quay 11, and is hollow. The upper end portion 12b has a flat shape.

Quay fixing portions 84a and 84b are constituted of a fixing member 88 made of a material having higher rust preventiveness than an iron material, such as stainless steel (SUS304 or the like), synthetic resin (polyethylene or the like) or the like, for example.

The fixing member 88 includes a front surface portion 88a mounted on a sidewall of the quay 11 and an upper end portion 88b mounted on the top end of the quay 11, while the front surface portion 88a and the upper end portion 88b are so connected with each other that a shape in sectional view is substantially inverted L-shaped along a corner formed by the top end and the sidewall of the quay 11. The front surface portion 88a and the upper end portion 88b of the fixing member 88 are connected with the front surface portion 12a and the upper end portion 12b of the buffer portion 12 respectively on a side opposite to a side in contact with the quay 11.

The front surface portion 88a and the upper end portion 88b of the fixing member 88 include through-holes 16a and 16b for inserting bolts for mounting the fender 10 on the quay 11 respectively, and peripheries of the through-holes 16a and 16b are in states exposed to the exterior.

Thus, the present invention can also be applied to the fender 80, which is of the type mounted on the corner of the top end of the quay 11, including the buffer portion 12 whose front surface portion 88a is substantially inverted P-shaped in sectional view, and durability of the fender 80 against corrosion can be improved.

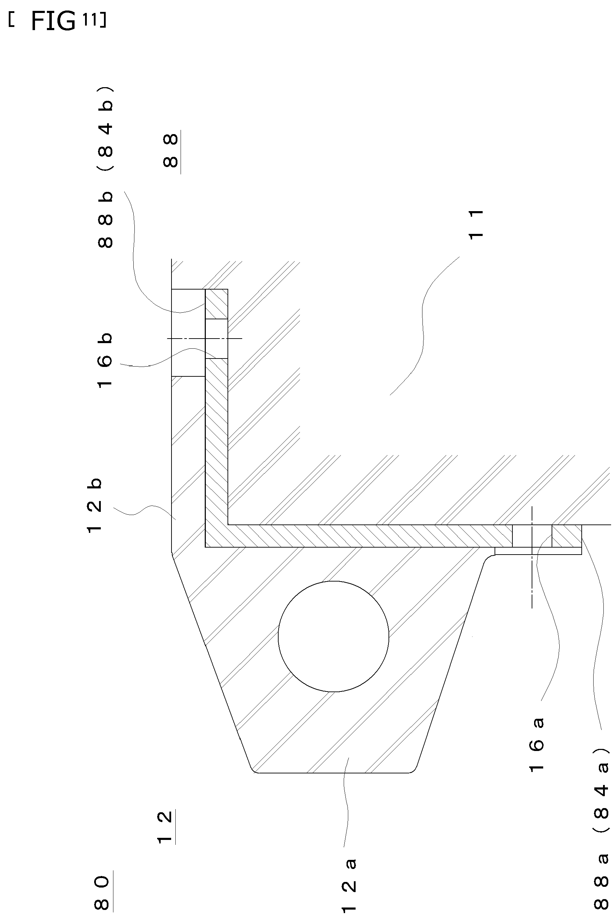

Fig. 11 is a schematic sectional view of a fender according to a tenth embodiment of the present invention. In description, the fender is basically identical to that according to the ninth embodiment, and hence the fender is described with reference to different points thereof.

Referring to the figure, a front surface portion 12a of a buffer portion 12 is substantially trapezoidally configured in sectional view dissimilarly to the ninth embodiment, and includes a circular hole in the interior thereof in a fender 80 according to this embodiment.

Thus, the present invention can also be applied to the fender 80, which is of a type mounted on a corner of a top end of a quay 11, including the buffer portion 12 whose front surface portion 88a is substantially trapezoidal in sectional view, and durability of the fender 80 against corrosion can be improved.

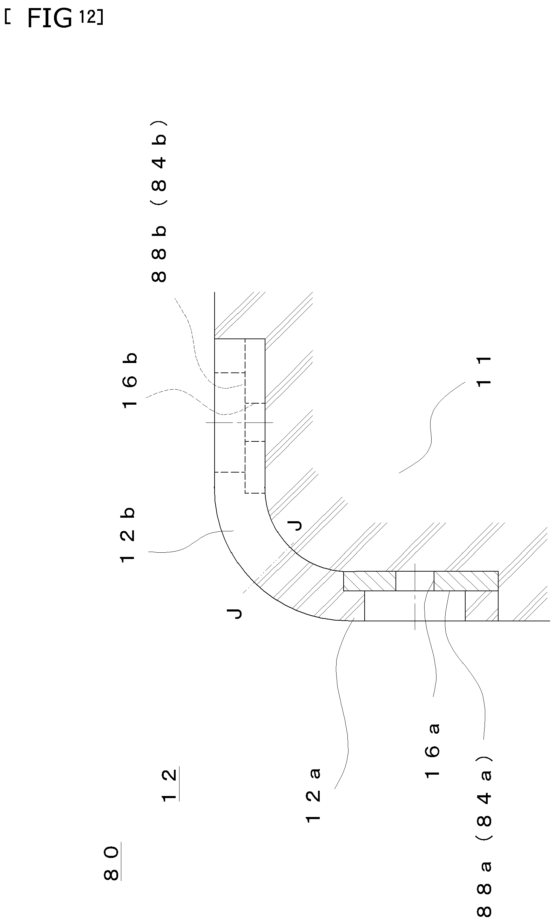

Fig. 12 is a partial schematic sectional view of a fender according to an eleventh embodiment of the present invention. In description, the fender is basically identical to that according to the ninth embodiment, and hence the fender is described with reference to different points thereof.

Referring to the figure, a fender 80 according to this embodiment is of a type mounted on a corner portion of a quay 11. First, a front surface portion 12a and an upper end portion 12b of a buffer portion 12 are connected with each other in the vicinity of a line J-J, and in shapes drawing an arc in sectional view in connected portions in the vicinity of this line J-J.

A fixing member 88a provided on a front surface of the quay 11 is connected on a vertical portion of the front surface portion 12a of the buffer portion 12 on a side opposite to a side in contact with the quay 11.

A fixing member 88b provided on a top end of the quay 11 is connected on a flat portion of the upper end portion 12b of the buffer portion 12 on the side opposite to the side in contact with the quay 11.

The fixing members 88a and 88b include through-holes 16a and 16b for inserting bolts for mounting the fender 10 on the quay 11 respectively, and peripheries of the through-holes 16a and 16b are in states exposed to the exterior. While the through-hole 16a and the through-hole 16b are in structures provided on different sections in Fig. 12, the through-holes are not restricted to these but may be in structures provided on the same section.

Thus, the present invention can also be applied to the fender 80 of the type mounted on the corner portion of the quay 11, and durability of the fender 80 against corrosion can be improved.

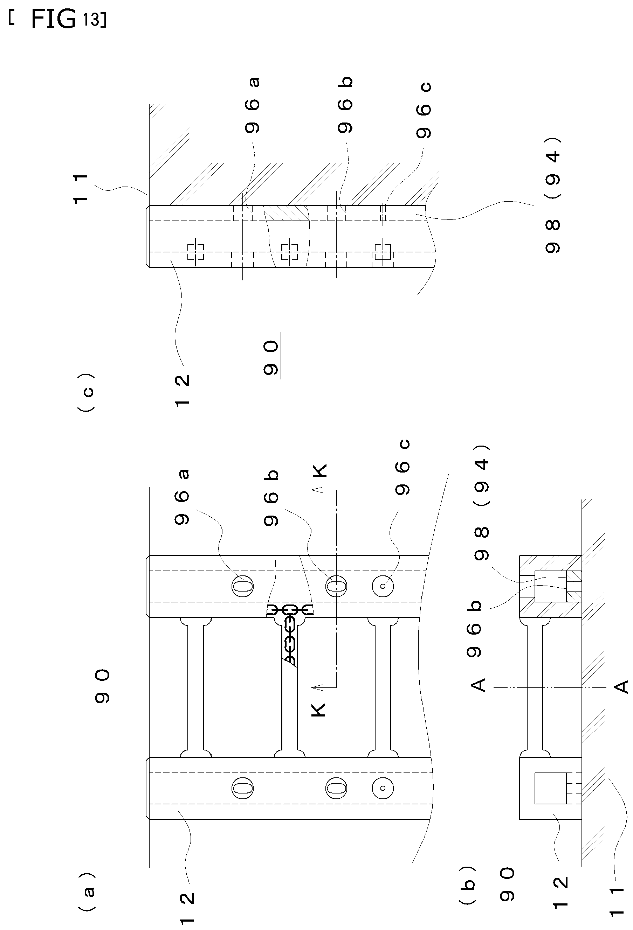

Fig. 13 shows appearance views of a fender according to a twelfth embodiment of the present invention. (a) is a front elevational view of the fender, (b) is a bottom plan view of the fender, and (c) is a side elevational view of the fender. In description, the fender is basically identical to that according to the first embodiment, and hence the fender is described with reference to different points thereof.

Referring to (a) to (c) of Fig. 13, a fender 90 according to this embodiment is of a ladder type. In other words, that having other functions is also included in the present invention, so far as the same is that having buffering properties and also having functions as a fender.

A buffer portion 12 is made of an elastic body such as a rubber material or the like and includes supports provided on both sides in front elevational view and step members provided at prescribed intervals between the supports. The supports are quadrilaterally configured in bottom plan view as shown at (b), and a sectional view along arrow on a line K-K shown at (a) is a U shape whose side closer to a quay 11 is open. A fixing member 98 (a quay fixing portion 94) is arranged in an opening portion of the U shape. The fixing member 98 (the quay fixing portion 94) is made of a material having higher rust preventiveness than an iron material, such as stainless steel (SUS304 or the like), synthetic resin (polyethylene or the like) or the like, for example.

Through-holes 96a, 96b and 96c are provided on the fixing member 98 at prescribed intervals.

Thus, the present invention can also be applied to the ladder-type fender 90, and durability of the fender 90 against corrosion can be improved.

Preferred modifications not shown in the aforementioned respective embodiments are described as follows:
While the structure in which the quay fixing portions 14a and 14b include the through-holes 16a to 16d has been shown in the first embodiment, it is also possible to fix the fender without employing the through-holes 16a to 16d, and hence the through-holes 16a to 16d are not requisite. A fender 10 not including the through-holes 16a to 16d is also included in the category of the present invention. Further, the quay fixing portions 14a and 14b may include at least five through-holes. This also applies to the second to fourth and eighth to eleventh embodiments.

In the aforementioned respective embodiments, the fixing members are preferably made of a material having smaller specific gravity than an iron material. For example, the fixing members can be made of a synthetic resin material, as hereinabove described.

When structuring the fender in this manner, the material having smaller specific gravity than an iron material is employed for the fixing members, whereby the weight of the whole of the fender can be reduced. In general, the cost related to transportation and disposal of a fender corresponds to the weight, and hence the cost can be further saved when structuring the fender in the aforementioned manner and reducing the weight.

Further, the fender can be brought into an arbitrary shape not having been shown in the aforementioned respective embodiments. For example, it is also possible to bring the shape of the fender into a truncated-cone type one.

While the technique of preparing the bumper plate fixing member 38 from stainless steel or resin or the like has been described in the third embodiment, the present invention is not restricted to this, but the bumper plate fixing member 38 may be made of an iron material.

In the fenders 60A described with reference to the sixth and seventh embodiments, further, the diameters of the through-holes 16a to 16d provided on the quay fixing portions 64a and 64b may be identical to or different from each other between the extended portions 65a and 65b and the fixing members 68a and 68b.

For example, the diameters of the through-holes provided on the extended portions 65a and 65b may be rendered larger than the diameters of the through-holes provided on the fixing members 68a and 68b in conformity to the sizes of head portions of bolts and washers. When structuring the fender in this manner, the head portions of the bolts and the washers come into contact with the fixing members 68a and 68b, whereby fixation to the quay or the like gets stronger when mounting the fender on the quay. In a case of structuring the fender in this manner, through-holes may be provided independently of each other between the extended portions 65a and 65b and the fixing members 68a and 68b. Alternatively, the diameters of the through-holes provided on the extended portions 65a and 65b may be spread by cutting off peripheries of the through-holes provided on the extended portions 65a and 65b in conformity to the sizes of the head portions of the bolts and the washers after temporarily making the through-holes passing through the extended portions 65a and 65b and the fixing members 68a and 68b.

Further, while the technique of cutting the fender material 60 along the cutting plane lines C1 to C3 in the direction orthogonal to the longitudinal direction Y in the prescribed length with respect to the longitudinal direction Y has been described in the sixth embodiment, the direction for cutting the fender material 60 is not restricted to this. For example, the fender material 60 may be cut in a direction, other than the orthogonal direction, intersecting with the longitudinal direction Y in a prescribed length with respect to the longitudinal direction Y, in response to a necessary shape of a fender, as to the direction for cutting the fender material 60.

While it has been described that the buffer portion 62A is made of a rubber material and the fixing members 68a and 68b are made of a combustible synthetic resin material in the seventh embodiment, the buffer portion and the fixing members may be configured in this manner also as to the remaining embodiments.

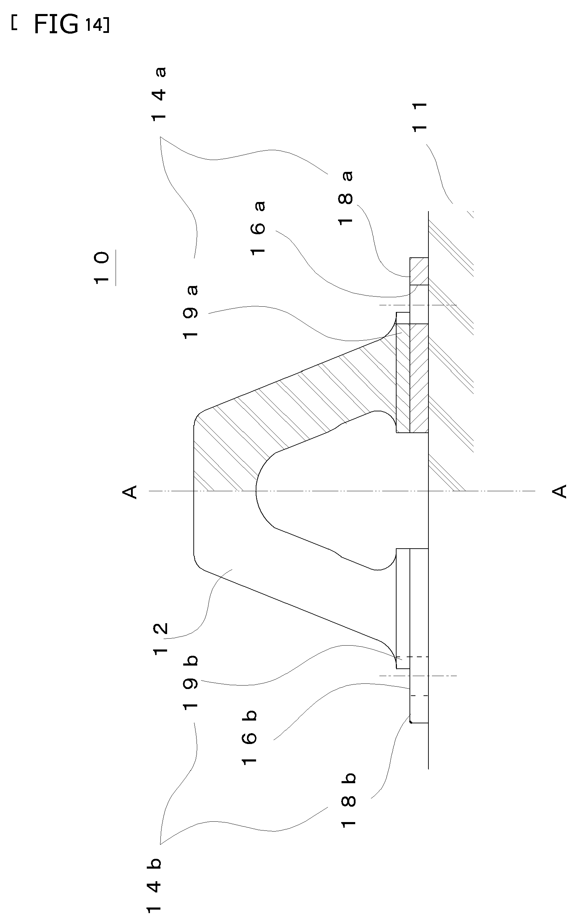

Fig. 14 is a schematic sectional view of a fender according to a thirteenth embodiment of the present invention. In description, the fender is basically identical to that according to the first embodiment, and hence the fender is described with reference to different points thereof.

Referring to Fig. 14, a quay fixing portion 14a includes a fixing member 18a and an elastic body 19a while a quay fixing portion 14b includes a fixing member 18b and an elastic body 19b in a fender 10 according to this embodiment. A buffer portion 12 and the fixing members 18a and 18b are bonded to each other through the elastic bodies 19a and 19b. In the following, it is assumed that the fixing members 18a and 18b are made of synthetic resin, as an example. However, the fixing members 18a and 18b are not restricted to this, but may be made of a material having higher rust preventiveness than an iron material, and may be made of stainless steel or the like, for example.

As to a more specific bonding method, sheetlike elastic bodies 19a and 19b made of rubber or the like are mounted on surfaces of the fixing members 18a and 18b in advance respectively. In mounting of the fixing members 18a and 18b and the elastic bodies 19a and 19b, the same may be integrated with each other by employing an adhesive, or may be integrated with each other by heat sealing.

Then, the fixing members 18a and 18b are mounted with respect to the buffer portion 12 through the elastic bodies 19a and 19b. In a case where the buffer portion 12 is made of synthetic rubber or natural rubber, the buffer portion 12 and the elastic bodies 19a and 19b mounted on the fixing members 18a and 18b may be mounted by vulcanization bonding, or may be mounted through an adhesive, for example. In a case where the buffer portion 12 is made of a thermoplastic elastomer such as urethane resin, polyethylene or the like, the buffer portion 12 and the elastic bodies 19a and 19b may be mounted through an adhesive, for example, or the elastic bodies 19a and 19b may be mounted with respect to the buffer portion 12 before hardening.

When structuring the fender in the aforementioned manner, the buffer portion 12 and the fixing members 18a and 18b can be strongly bonded to each other with no unevenness.

Although the present invention has been described and illustrated in detail, it is clearly understood that the same is by way of illustration and example only and is not to be taken by way of limitation, the spirit and scope of the present invention being limited only by the terms of the appended claims.

### Industrial Availability

As hereinabove described, the fender according to the present invention is suitable to be mounted on a quay or the like and used in order to relieve an impact at the time of mooring of a ship, for example, while the method of mounting a fender and the method of manufacturing a fender according to the present invention are suitable for mounting and manufacturing of such a fender.

## Claims

1. A fender (10, 20, 30, 40, 80, 90) mounted on a quay or the like, comprising:
a buffer portion (12) for relieving an impact at the time of mooring of a ship; and
a quay fixing portion (14a, 14b, 24, 24a, 24b, 44a, 44b, 84a, 84b, 94) for mounting the buffer portion on the quay or the like, wherein
the quay fixing portion includes a fixing member (18a, 18b, 28, 28a, 28b, 48a, 48b, 88a, 88b, 98) having higher rust preventiveness than an iron material.

2. The fender according to claim 1, wherein
the fixing member is made of a material having smaller specific gravity than an iron material.

3. The fender according to claim 1 or 2, wherein
the buffer portion is made of a rubber material, and
the fixing member is made of a combustible material.

4. The fender according to any one of claims 1 to 3, wherein
the fixing member is provided in the form of a flat plate in order to come into contact with the quay or the like as the quay fixing portion, and
connected with the buffer portion on a side opposite to a side coming into contact with the quay or the like.

5. The fender according to any one of claims 1 to 3, wherein
the fixing member is embedded in the quay fixing portion.

6. The fender according to any one of claims 1 to 5, wherein
the quay fixing portion further includes a through-hole (16a to 16d, 96a to 96c) for inserting a bolt for mounting the fender on the quay or the like, and
the through-hole passes through the fixing member.

7. The fender according to any one of claims 1 to 6, wherein
the buffer portion includes a bumper plate (32) provided on a side coming into contact with the ship and a bumper plate fixing portion (34, 34a, 34b) for fixing the bumper plate, and
the bumper plate fixing portion includes a bumper plate fixing member (38, 38a, 38b) having higher rust preventiveness than an iron material.

8. A method of mounting a fender (50) comprising a buffer portion for relieving an impact at the time of mooring of a ship and a quay fixing portion (54a, 54b), employed for mounting the fender on a quay or the like, including a fixing member (58a, 58b) having higher rust preventiveness than an iron material, including steps of:
providing a through-hole in the quay fixing portion on a position corresponding to a mounting bolt in the quay or the like serving as an installation location to pass through the fixing member; and
mounting the quay fixing portion on the quay through the through-hole with the mounting bolt.

9. A method of manufacturing a fender (60A) comprising a buffer portion for relieving an impact at the time of mooring of a ship and a quay fixing portion (64a, 64b), employed for mounting the buffer portion on a quay or the like, including a fixing member (68a, 68b) having higher rust preventiveness than an iron material, including steps of:
preparing a fender material (60) extending in a longitudinal direction so that a section in a short-side direction has the same shape by connecting a member (62) corresponding to the buffer portion to a member (64R, 64L) corresponding to the quay fixing portion;
cutting the fender material in a direction intersecting with the longitudinal direction in a prescribed length with respect to the longitudinal direction; and
providing a through-hole in the quay fixing portion on a position corresponding to a mounting bolt in the quay or the like serving as an installation location to pass through the fixing member.
